# EUROPEAN PATENT APPLICATION

(11) **EP 2 363 669 A2**
(43) Date of publication of application: **07.09.2011**
(21) Application number: 11154852.5
(22) Date of filing: 17.02.2011
(51) Int. Cl.: F25B 45/00

(54) **Maintenance device for conditioning systems**

(30) Priority: 03.03.2010 IT PR20100015
(71) Applicant: Brain Bee Holding S.p.A., 43126 Parma (IT)
(72) Inventor: Cantadori, Andrea, 43123 Parma (IT)
(74) Representative: Gotra, Stefano

(57) **Abstract**

A maintenance device (1) for conditioning systems comprises a recycling unit (2) connectable to a conditioning system to draw and purify a quantity of refrigerating fluid from said conditioning system, a depositing tank (3) located operationally downstream of the recycling unit (2) to receive the quantity of refrigerating fluid, and a refilling unit (4) for the conditioning system, for drawing off a preset quantity of refrigerating fluid from the tank (3) and injecting it into the conditioning system. This refilling unit (4) comprises a volumetric dosing device (22) featuring a chamber (23) of variable volume from a minimum volume to a maximum volume for sucking into the chamber (23) a quantity of refrigerating fluid substantially equal to the maximum volume of the chamber (23).

## Description

The present invention has as its subject a maintenance device for conditioning systems, in particular for vehicle conditioning systems.

The present invention finds its principal application in the automobile field, especially in vehicle repair shops.

As is well-known, some types of conditioning systems, especially in the automobile sector, are subject to leaks of refrigerating fluid and periodically require the system to be refilled.

This operation is typically performed using dedicated devices for the maintenance of conditioning systems which are capable of recovering, recycling and refilling the refrigerating fluid into the system itself.

In particular, devices of the known art have a recycling unit which removes the refrigerating fluid (typically R134a or similar) from the conditioning system for the purpose of filtering and purifying it.

The recycling unit comprises an intake valve, an absorption filter which enables the refrigerating fluid to be separated from the exhausted oils, and a condenser.

Downstream of the recycling unit there is a depositing tank into which the purified refrigerating fluid is made to flow.

This depositing tank is provided with an auxiliary intake through which a user is able to introduce further refrigerating fluid for "topping up".

In this way the user can re-establish the correct quantity of refrigerating fluid to be introduced into the conditioning system.

Through the use of a vacuum pump, located downstream from the tank, a depression is created which moves the refrigerating fluid from the tank towards the conditioning system through a dedicated delivery pipe.

In an end portion of this delivery pipe there is typically present an injection joint which is connected to the conditioning system to allow the injection of refrigerating fluid into the system, completing its refilling.

Among the solutions in the known art, document US 5722247 describes a recovery and refilling system for high-pressure refrigerating fluids.

The majority of the devices of the known art comprises a load cell connected to the tank so as to be capable of measuring its mass for the purpose of monitoring both the quantity of "recycled" refrigerating fluid and the quantity subsequently injected into the conditioning system.

Once the load cell measures a variation in mass of the tank corresponding to the quantity of refrigerating fluid to be injected into the conditioning system, a regulating valve is closed and the vacuum pump stops its action.

Disadvantageously, the presence of the load cell makes the system rather fragile and inaccurate.

In fact, the load cell is a very delicate element which can easily be damaged as a result of mechanical stresses.

Furthermore, carrying out the measurement on the tank of the mass of the refrigerating substance to be injected leads to a delay and consequently to the formation of so-called "filling queues" inside the delivery pipes, which at the most can be compensated for by means of a dedicated control system.

Again, in the devices of the known art the movement of the refrigerating fluid occurs following the pressure leap which is created between the tank and the vacuum pump.

Disadvantageously, in particular periods of the year, this pressure leap tends to reduce, making it possible to reach equilibrium between the pressures and compromising the correct operation of the device. Document JP 8303911, too, makes a measurement of the mass, even if indirect, since it uses a mass flow sensor. The determination of the mass thus occurs by means of an operation of integrating the value of the flow measured.

In this context, the technical task at the base of the present invention is to propose a maintenance device for conditioning systems which will overcome the disadvantages of the known art mentioned above.

In particular, it is an object of the present invention to make available a maintenance device for conditioning systems which is reliable and accurate.

The declared technical task and the specified objects are substantially achieved by a maintenance device for conditioning systems, comprising the technical characteristics set forth in one or more of the attached claims.

Additional characteristics and advantages of the present invention will become more readily apparent from the indicative, and hence non-limiting, description of a preferred but not exclusive embodiment of a maintenance device for conditioning systems, as illustrated in the accompanying drawings in which:

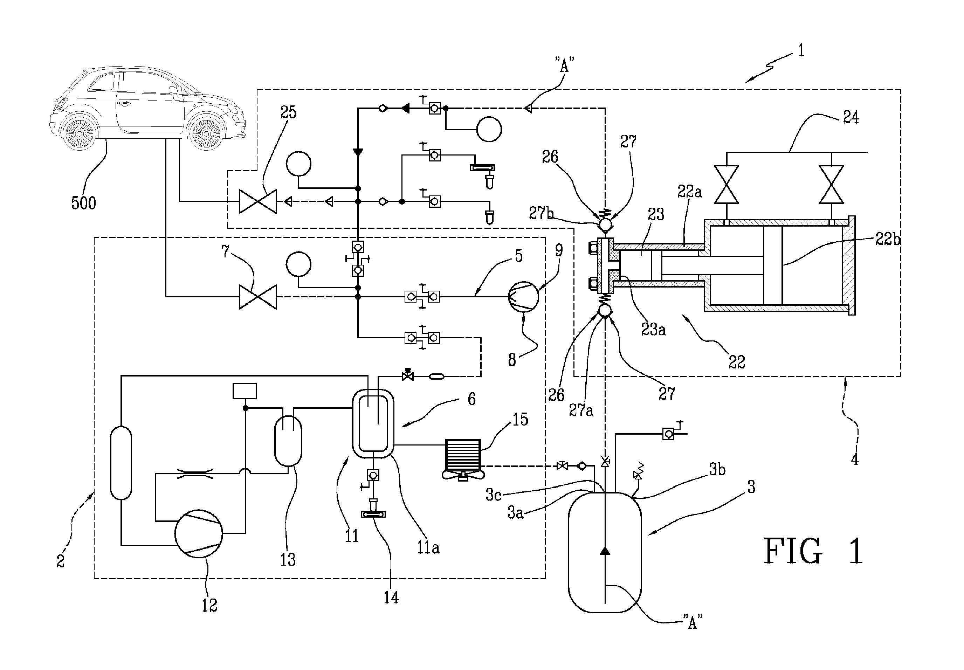

- figure 1 is a schematic representation of a device according to the present invention.
- figure 2 is a view in section of a detail of the device shown in figure 1.

With reference to the attached figures, no. 1 indicates a maintenance device for conditioning systems in accordance with the present invention.

Device 1 comprises a recycling unit 2 for a refrigerating fluid removed from a conditioning system, a depositing tank 3 for the refrigerating fluid and a refilling unit 4 capable of injecting the recycled refrigerating fluid, together with the additional "topping up" fluid, into the conditioning system.

The recycling unit 2 features a recovery unit 5 for the refrigerating fluid and a filtering unit 6 for recycling this refrigerating fluid.

The recovery unit 5 is connected to the conditioning system by means of a junction 7, preferably sealed, from which the refrigerating fluid to be filtered is drawn. To draw off the refrigerating fluid, the recovery unit 5 comprises a suction organ 8 which generates a depression such as to allow the refrigerating fluid to be drawn off.

In the preferred embodiment, the suction organ 8 comprises a vacuum pump or compressor 9.

Downstream the recovery unit 5, the recycling unit 2 comprises a filtering unit 6 suitable for purifying the refrigerating fluid from the agents with which it is currently in contact during the refrigerating cycles which it performs in the conditioning system.

More precisely, the filtering unit 6 comprises a separation organ 11 capable of separating the refrigerating fluid from the exhausted oils, so as to make it recyclable and reusable inside the conditioning system.

In the preferred embodiment, the separation organ 11 is advantageously formed by a distiller 11a.

In this way, the refrigerating fluid is carried in gaseous form, making the separation from the exhausted oils simple.

To achieve the separation, the filtering unit 6 comprises a compressor 12 in order to facilitate the separation between the oils and residues of refrigerating fluid.

In order to avoid mixing between the condensate from the air and the lubricating oil for the compressor 12, the compressor 12 is equipped with a further separation organ 13 similar to the previous one.

In this light, the filtering unit 6 comprises a drain for the exhausted oils 14.

Given that to effect the purification, the refrigerating fluid is carried in the gaseous state, downstream the filtering unit 6 there is a condenser 15, which returns the majority of the refrigerating fluid to the liquid state so as to allow it to be simply stored.

Indeed, downstream the condenser 15 is located the depositing tank 3 for the refrigerating fluid, in which the purified fluid is stored while awaiting being refilled into the conditioning system.

This depositing tank 3 is a pressure container which tends to maintain the refrigerating fluid in the liquid state.

By way of example, the tank can have a capacity variable between 5 litres and more than 50 litres.

This tank 3 features a plurality of nozzles for the fluid to enter or leave.

In particular, the tank 3 has at least one first entry nozzle 3a in fluid connection with the condenser 15 and a second entry nozzle 3b from which a user has the possibility of topping up the fluid present in the tank 3 with a further quantity of the same, so as to restore the correct quantity to be injected into the conditioning system.

Tank 3 features furthermore an exit nozzle 3c in fluid connection with the previously mentioned refilling unit 4.

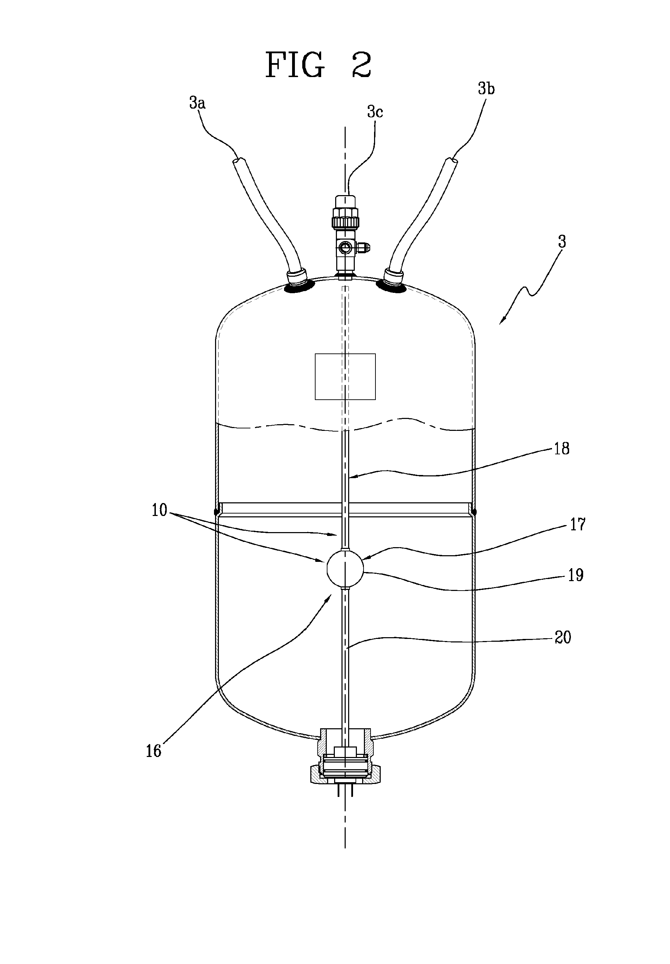

A level sensor 16 (figure 2) is associated to the tank 3 to measure the level of refrigerating fluid present therein.

Advantageously, this makes it possible to assess the quantity of purified fluid removed from the conditioning system, so as to be able to carry out measurements and checks on the level of sealing of the conditioning system itself.

The level sensor 16, in fact, makes it possible to measure the volume of refrigerating fluid recovered and, by the use of further pressure and temperature sensors, it is possible to deduce the value in mass terms of the refrigerating fluid recovered.

Advantageously, this makes it possible to avoid the use of the load cell for carrying out diagnostic analyses on the sealing of the conditioning system.

Preferably, the level sensor 16 is located internally to the tank 3.

Even more preferably, the level sensor 16 comprises a float 17 and a guide 18 located inside the tank 3.

Even more preferably, the guide 18 is oriented perpendicularly to the free surface of the refrigerating fluid in the tank.

In detail, the float 17 is slidably attached to the guide 18 to determine the fluid level with extreme precision.

In the embodiment illustrated, the level sensor 16 comprises a magnetostrictive sensor connected to the float 17 and/or the guide 18.

More precisely, a magnet 19 is anchored to the float 17 and is slidable along the guide 18, to which is anchored a magnetostrictive wire 20.

Advantageously, magnetostrictive sensors allow highly accurate measurements, making very limited top-ups of the conditioning system possible.

The refilling unit 4 draws the refrigerating fluid from the tank 3 and injects it into the conditioning system to refill it.

In particular, this refilling unit 4 sucks the refrigerating fluid from the tank 3, compresses this fluid and finally injects it into the conditioning system.

In this light, the refilling unit 4 comprises a volumetric dosing device 22 featuring a chamber 23 switchable from a minimum volume configuration to a maximum volume configuration for sucking into the chamber 23 a quantity of refrigerating fluid substantially equal to the maximum volume 23.

In other words, the chamber 23 is of variable volume between a maximum value and a minimum value so as to accept within it a quantity of refrigerating fluid substantially equal to the maximum value of the chamber 23.

Furthermore, the chamber 23 is switchable from the maximum to the minimum volume configuration in order to compress the sucked refrigerating fluid before injecting said refrigerating fluid into the conditioning system. More precisely, the chamber 23 has at least one movable wall 23a to reduce its volume and/or compress the sucked refrigerating fluid, at a stage immediately previous to the injection of the refrigerating fluid into the conditioning system.

In the embodiment illustrated, the volumetric dosing device 22 comprises a cylinder 22a and a piston 22b slidable in the cylinder 22a so as to form the variable-volume chamber 23.

In other words, an active portion of the piston 22b forms the movable wall 23a.

The piston 22b slides in one direction to expand the volume of the chamber 23 and take the chamber 23 from the minimum volume configuration to the maximum volume configuration, sucking the refrigerating fluid from the tank 3.

The chamber 23 also slides in the opposite direction to reduce the volume of the chamber 23 and bring the chamber 23 from the maximum volume configuration to the minimum volume configuration, injecting the refrigerating fluid contained therein into the conditioning system.

Advantageously, the maximum volume of the chamber 23 being known, or rather the stroke of the piston 22b being known, it is simple to calculate the volume of refrigerating fluid drawn in from the tank 3, and, consequently, knowing injection pressure and temperature, to know the quantity injected in mass terms.

Thanks to this expedient, it is possible to avoid the use of a load cell even as regards the injection stage, allowing its removal from the device.

This confers enormous advantages in terms of reliability to the device 1, eliminating the problems relating both to the fragility of the load cells, and to their complicated calibration.

In the embodiment illustrated, the cylinder 22a is of pneumatic type.

In other words, the piston 22b is moved by compressed air injected through electrovalves 24, suitably controlled.

In alternative embodiments, the movement can occur through hydraulic or electrical actuation.

In order to allow the compression of the refrigerating fluid inside the chamber 23, the refilling unit 4 comprises a valve 25 to regulate the flow of the refrigerating fluid, located operationally downstream of the volumetric dosing device 22.

In other words, the valve 25 is located downstream of the cylinder 22a.

This valve 25 is controllable and switchable between a locking configuration, in which it impedes the passage of the refrigerating fluid, and a discharge configuration, in which it allows the passage of the refrigerating fluid.

The valve 25 is in locking configuration when the chamber 23 passes from the maximum volume configuration to an intermediate configuration in order to allow the refrigerating fluid to be compressed.

When the chamber 23 passes from the intermediate configuration to the minimum volume configuration, the valve 25 passes from the locking configuration to the discharge configuration.

Therefore, in use, the piston 22b is actuated in order to reduce the volume of chamber 23.

Given that the valve 25 is closed, the action of the piston 22b compresses the refrigerating fluid present in the chamber 23 and along a duct which connects the chamber 23 to the valve 25.

Advantageously, this compression allows all the refrigerating fluid to be brought to the liquid phase, i.e. ready to be reintroduced into the conditioning system.

Once all the fluid is in the liquid phase, the valve 25 is brought into discharge configuration to allow the injection of the refrigerating fluid into the conditioning system.

Preferably, in proximity to the valve 25 there is located a union connecting with the conditioning system. In order to allow correct compression and precise circulation of the fluid inside the device 1, the device according to the present invention comprises flow-regulating means 26 for regulating the flow of refrigerating fluid to enable this refrigerating fluid to flow only along a preset advancing direction "A". More precisely, the regulating means 26 comprise at least one pair of retaining valves 27 placed respectively immediately upstream and immediately downstream of the volumetric dosing device 22.

In other words, a first retaining valve 27a is located in proximity to an entrance to the chamber 23 so as to allow the refrigerating fluid to flow only inwards.

A second retaining valve 27b is located in proximity to an exit from the chamber 23 so as to allow the refrigerating fluid to flow only outwards from the chamber 23 itself.

Advantageously, this prevents backflow of the refrigerating fluid towards the tank 3 once the fluid itself has entered the chamber 23.

Preferably, the device according to the present invention comprises a processing unit (not illustrated) which relates together the parameters for level, temperature and pressure of the fluid so as to deduce the mass of refrigerating fluid inside the tank 3.

The processing unit is also capable of relating, with known formulae, the stroke of the piston 22b with the temperature and injection pressure to deduce the mass of refrigerating fluid injected during refilling.

In other words, the processing unit is suitable for receiving a first signal representing the volume of refrigerating fluid injected, and comprises a sub-unit suitable for processing this first signal and sending a second signal representing the mass of injected refrigerating fluid.

The invention achieves the proposed objects and obtains important advantages.

The use of a volumetric dosing device having the chamber of variable volume, but known, renders more reliable and functional the procedure for refilling the conditioning system.

The measurements of mass (direct and indirect) performed in the solutions of the known art have thus been avoided.

Indeed, a quantity of refrigerating fluid equal to the maximum volume of the chamber is drawn from the tank and subsequently injected into the system, without the need for measurements of mass to check the quantity of fluid used, thus eliminating the load cell, which is a component of low reliability and difficult to calibrate. Furthermore, the stage of compressing the fluid immediately after sucking it into the chamber guarantees that all the refrigerating fluid injected into the conditioning system is completely in the liquid state. Again, the presence of a level sensor eliminates the need to use a load cell for the purpose of measuring the quantity of refrigerating fluid removed from the systems at the recovery stage.

Furthermore, the sensor being magnetostrictive ensures a far higher degree of accuracy than is ensured by the load cell, and this allows the conditioning system to be topped up even with small quantities without incurring error.

## Claims

1. Maintenance device (1) for conditioning systems comprising:
a recycling unit (2) that is connectable to a conditioning system for drawing and purifying a quantity of refrigerating fluid by said conditioning system;
a depositing tank (3) placed operationally downstream of the recycling unit (2) to receive said quantity of refrigerating fluid;
a refilling unit. (4) for refilling the conditioning system for drawing a preset quantity of refrigerating fluid from the tank (3) and injecting said preset quantity of refrigerating fluid into said conditioning system,
**characterised in that** said refilling unit (4) comprises a volumetric dosing device (22) comprising a cylinder (22a) and a piston (22b) slidable in said cylinder (22a) in such a way as to form a chamber (23) of variable volume, which is switchable from a minimum volume configuration to a maximum volume configuration for sucking into said chamber (23) a quantity of refrigerating fluid substantially equal to said maximum volume.

2. Device (1) according to claim 1, **characterised in that** the chamber (23) is switchable from the maximum volume configuration to the minimum volume configuration to compress the sucked refrigerating fluid before injecting said refrigerating fluid into the conditioning system.

3. Device (1) according to any of the preceding claims, **characterised in that** it comprises a regulating valve (25) for regulating the flow of the refrigerating fluid, said valve (25) being positioned operationally downstream of the volumetric dosing device (22) and being selectively switchable between a locking configuration, in which it prevents the passage of the refrigerating fluid, and a discharging configuration in which it permits the passage of the refrigerating fluid.

4. Device (1) according to claim 3, **characterised in that** the valve (25) is in the locking configuration when the chamber (23) moves from the maximum volume configuration to an intermediate configuration in order to enable the refrigerating fluid to be compressed, said valve (25) moving from the locking configuration to the discharge configuration when the chamber (23) moves from the intermediate configuration to the minimum volume configuration.

5. Device (1) according to any of the preceding claims comprising flow-regulating means (26) for regulating the flow of refrigerating fluid to allow this refrigerating fluid to flow only along a preset advancing direction.

6. Device (1) according to claim 5, **characterised in that** the regulating means (26) comprise at least one pair of retaining valves (27) placed respectively immediately upstream and immediately downstream of the volumetric dosing device (22).

7. Device (1) according to any one of the preceding claims, **characterised in that** it comprises a processing unit suitable for receiving a first signal representing the volume of injected refrigerating fluid, said processing unit comprising a sub-unit suitable for processing this first signal and sending a second signal representing the mass of injected refrigerating fluid.

8. Device (1) according to any one of preceding claims, **characterised by** comprising a level sensor (16) active in the tank (3) to measure the quantity of refrigerating fluid drawn from the conditioning system.

9. Device (1) according to claim 8, **characterised in that** the level sensor (16) comprises a float (17) that is movable along a rectilinear guide (18).

10. Device (1) according to claim 8 or 9, **characterised in that** the level sensor (16) comprises a magnetostrictive sensor (10) associated with the float (17) and/or the rectilinear guide (18).
